**Europäisches Patentamt**

**European Patent Office**

**Office européen des brevets**

(19)

(11) Veröffentlichungsnummer: **0 316 561**
**B1**

(12) ## EUROPÄISCHE PATENTSCHRIFT

(45) Veröffentlichungstag der Patentschrift:
**13.06.90**

(51) Int. Cl.⁵: **B29C 45/47**

(21) Anmeldenummer: **88116426.3**

(22) Anmeldetag: **05.10.88**

(54) **Kunststoff-Spritzgiesseinheit.**

(30) Priorität: **20.10.87 DE 3735419**

(43) Veröffentlichungstag der Anmeldung:
**24.05.89 Patentblatt 89/21**

(45) Bekanntmachung des Hinweises auf die Patenterteilung:
**13.06.90 Patentblatt 90/24**

(84) Benannte Vertragsstaaten:
**AT CH DE ES FR GB IT LI NL**

(56) Entgegenhaltungen:
**DE-A- 2 048 796**

(73) Patentinhaber: **Hehl, Karl, Arthur-Hehl-Strasse 32,
D-7298 Lossburg 1(DE)**

(72) Erfinder: **Hehl, Karl, Arthur-Hehl-Strasse 32,
D-7298 Lossburg 1(DE)**

(74) Vertreter: **Mayer, Friedrich, Dr., Patentanwälte Dr. Mayer
& Frank Westliche 24, D-7530 Pforzheim(DE)**

## Beschreibung

Die Erfindung bezieht sich auf eine Kunststoff-Spritzgießeinheit (Einheit) entsprechend dem Oberbegriff des Patentanspruches 1.

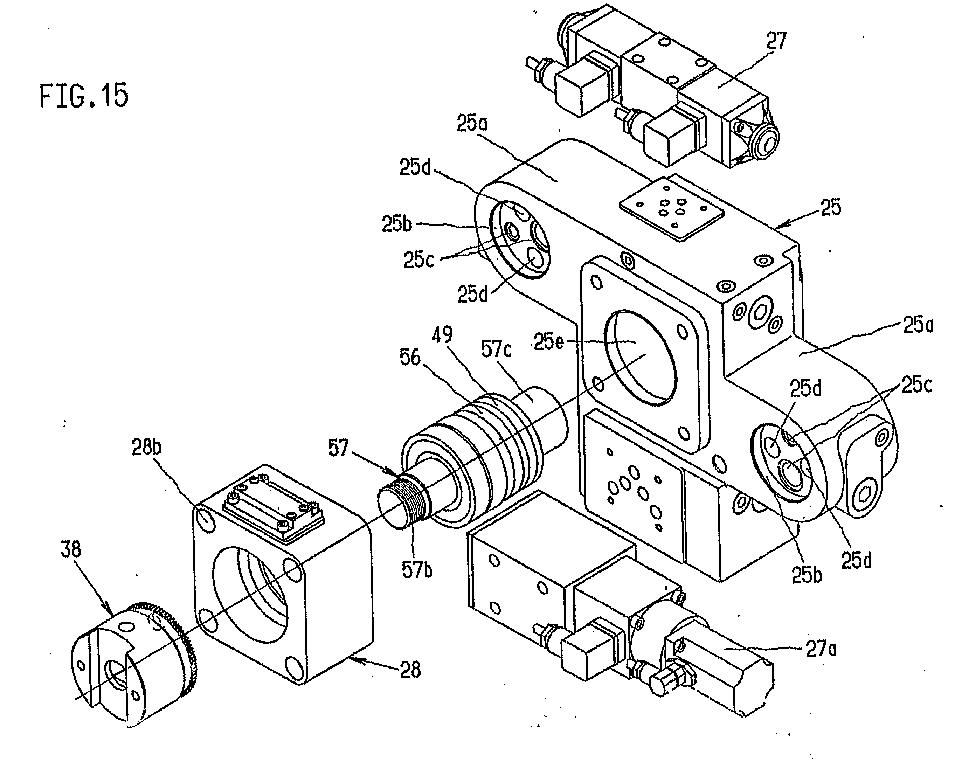

Bei einer bekannten Einheit dieser Art (DE-34 47 597 C1; EP-OS 0 198 410 Fig. 24) sind die dem Plastifizierzylinder zugewandten Enden der durch Stahlhülsen gebildeten eigentlichen Zylinder der Antriebszylinder in korrespondierenden Ringschultern des Blockes abgestützt. Die zugehörigen, muffenartigen, die Führungssäulen dicht umschließenden Zylinderdeckel erstrecken sich nahezu über die ganze axiale Länge der Bohrungen und sind in diesen spielfrei eingepaßt. Demzufolge sind die Antriebszylinder erst nach vollständiger Montage der Spritzgießeinheit funktionsfähig. Bei einem Block der vorgenannten Art ist es auch bekannt (ältere Patentanmeldung P 37 22 228.7-16, Fig. 14, 16), die Führungssäulen und somit auch die Antriebszylinder zum Aufsetzen und Absetzen der Spritzgießeinheit auf die Spritzgießform derart anzuordnen, daß ihre Achsen in einer Ebene liegen, die einen Winkel zur Horizontalen einschließt.

Üblich ist es auch, die Bohrungen im Block als solche als die eigentlichen Zylinder der hydraulischen Antriebs- und Einspritzzylinder zu nutzen (z.B. DE-AS 2 065 189). In einem Falle werden dabei die die eigentlichen Zylinder der Einspritzzylinder bildenden Bohrungen im Block in einer Ebene angeordnet, der einen Winkel von etwa 45° zur Horizontalen einschließt (Spritzgußmaschine der Krauss-Maffei AG, München, Baureihe Monomat, Typ 50).

Hiervon ausgehend liegt der Erfindung die Aufgabe zugrunde eine Kunststoff-Spritzgießeinheit gemäß dem Oberbegriff des Patentanspruches 1 derart weiterzubilden, daß wesentlich günstigere Voraussetzungen für eine rationelle Serienfertigung und für eine rasche Durchführung von Reparaturarbeiten, insbesondere im Betrieb des Käufers vorliegen; dies vor allem durch den Zusammenbau funktionsfähiger baulicher Einheiten bei der Montage und der Möglichkeit eines raschen Austausches dieser Einheiten bei Betriebsstörungen.

Diese Aufgabe wird erfindungsgemäß durch die im Patentanspruch 1 genannten Merkmale gelöst.

Bei dieser Lösung stellt die Kunststoff-Spritzgießeinheit, im Gegensatz zu üblichen Spritzgießeinheiten, ein weitgehend offenes Gefüge baulicher Einheiten dar. Die im Lager bereitgehaltenen Antriebszylinder und Einspritzzylinder können mit geringem Arbeitsaufwand in die Bohrungen des Blockes eingesetzt werden. Der Plastifizierzylinder ist mit verhältnismäßig wenigen Handgriffen vom Block abnehmbar oder nach Programm auswechselbar. Vor der Montage können die Zylinder auf Arbeitsfähigkeit überprüft werden. Im Betrieb des Käufers ist im Falle einer Betriebsstörung ein Austausch auch von weniger geschultem Personal möglich. Dabei kann die Betriebsausfallzeit wesentlich verkürzt werden. Schließlich ist die Kunststoff-Spritzgießeinheit von der überwachenden Person im Gefüge ihrer funktionellen Einheiten leichter überschaubar, trotz eines extrem raumsparenden Aufbaues.

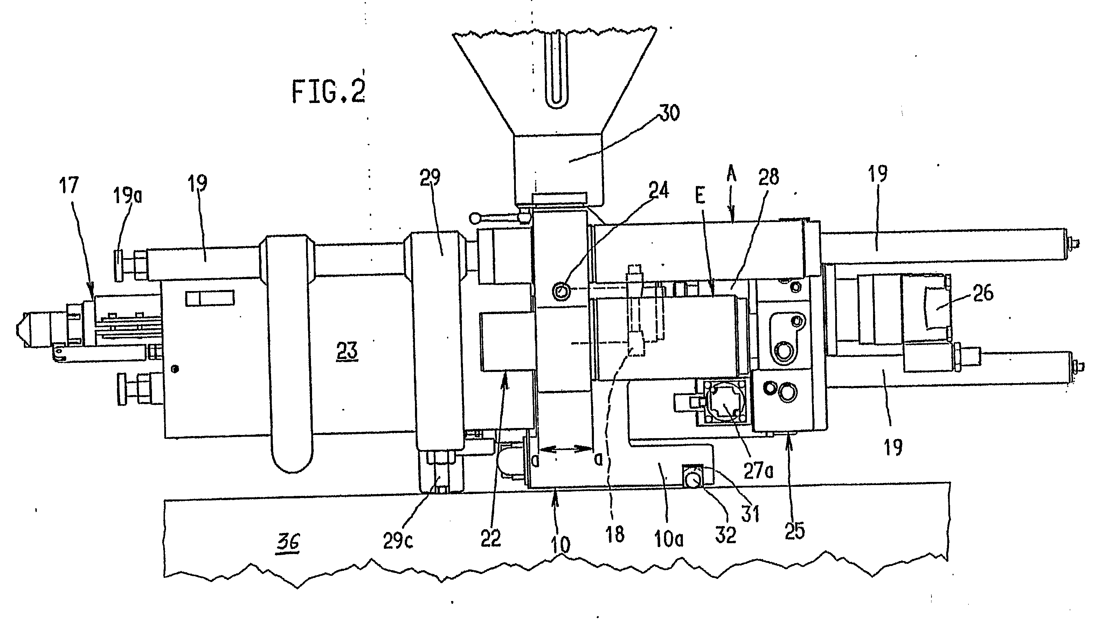

Bei einer Ausbildung nach Patentanspruch 3 werden die Antriebszylinder und Einspritzzylinder nach Einschrauben in die Bohrungen mit Hilfe von Meßgeräten zentriert, bevor sie durch Anziehen der Spannschrauben (24 in Fig. 2) im Block endgültig in lagegerechter Position festgelegt sind.

Bei einer Ausbildung nach Patentanspruch 7 gelangt das Drucköl vom Regelventil (27a in Fig. 2) über Bohrungen in der Einspritzbrücke und über Axialbohrungen in den Einspritzkolben in die Zylinderräume der Einspritzzylinder. Durch eine solche Ölzufuhr ausschließlich über ein starres Leitungssystem ohne flexible, sich unter Druck dehnende und somit 'atmende' Leitungsabschnitte werden negative Einflüsse auf die Regelung des Einspritzvorganges zuverlässig vermieden.

Weitere Ausgestaltungen der Erfindung sind in den Unteransprüchen dargestellt.

Nachstehend wird die Erfindung anhand der Zeichnung an einem Ausführungsbeispiel erläutert.

Es zeigen:

Fig. 1 die Kunststoff-Spritzgießeinheit (Einheit) in Draufsicht,

Fig. 2 die auf dem Maschinenfuß einer Kunststoff-Spritzgießmaschine abgestützte Einheit gemäß Fig. 1 in Seitenansicht,

Fig. 3, 3a den Träger- und Versorgungsblock (Block 10) des Plastifizierzylinders in perspektivischen Darstellungen,

Fig. 4 den Block der Einheit mit eingefügten Antriebszylindern,

Fig. 5 einen Antriebszylinder der Kunststoff-Spritzgießeinheit im Axialschnitt,

Fig. 6 den Block der Kunststoff-Spritzgießeinheit mit eingefügten Einspritzzylindern,

Fig. 7 einen Einspritzzylinder im Axialschnitt in vergrößerter Darstellung,

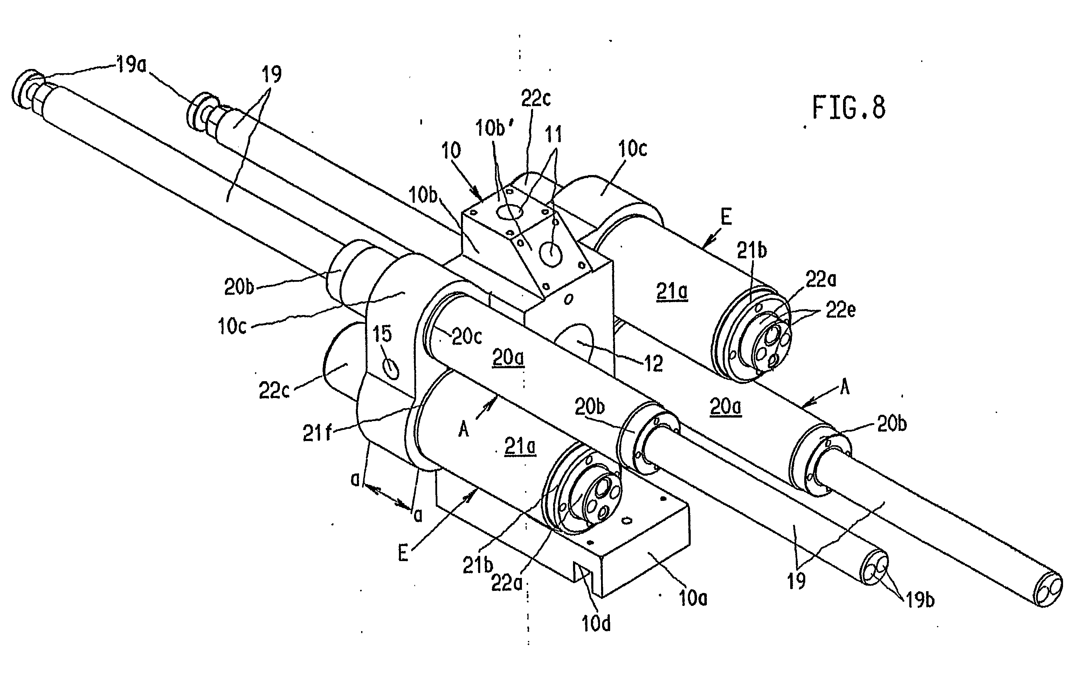

Fig. 8 den Block der Einheit mit eingefügten Antriebs- und Einspritzzylindern,

Fig. 9 den Block der Einheit mit dem vorgespannten Plastifizierzylinder,

Fig. 10 den Plastifizierzylinder der Kunststoff-Spritzgießeinheit in perspektivischer Darstellung,

Fig. 10a das rückwärtige Ende des Plastifizierzylinders im Schnitt,

Fig. 11 die Spanneinrichtung zur Verriegelung des Plastifizierzylinders im Block,

Fig. 12 den Block der Einheit nach Montage der Antriebszylinder, der Einspritzzylinder und nach Aufnahme des Plastifizierzylinders in perspektivischer Darstellung mit einem Stützbügel für die Führungssäulen und einer Einrichtung zur justierenden Abstützung des Blockes,

Fig. 13, 14 den Stützbügel und den Lagerbalken der Justiereinrichtung je nach Fig. 12 und

Fig. 15 die die Einspritzzylinder verbindende Einspritzbrücke.

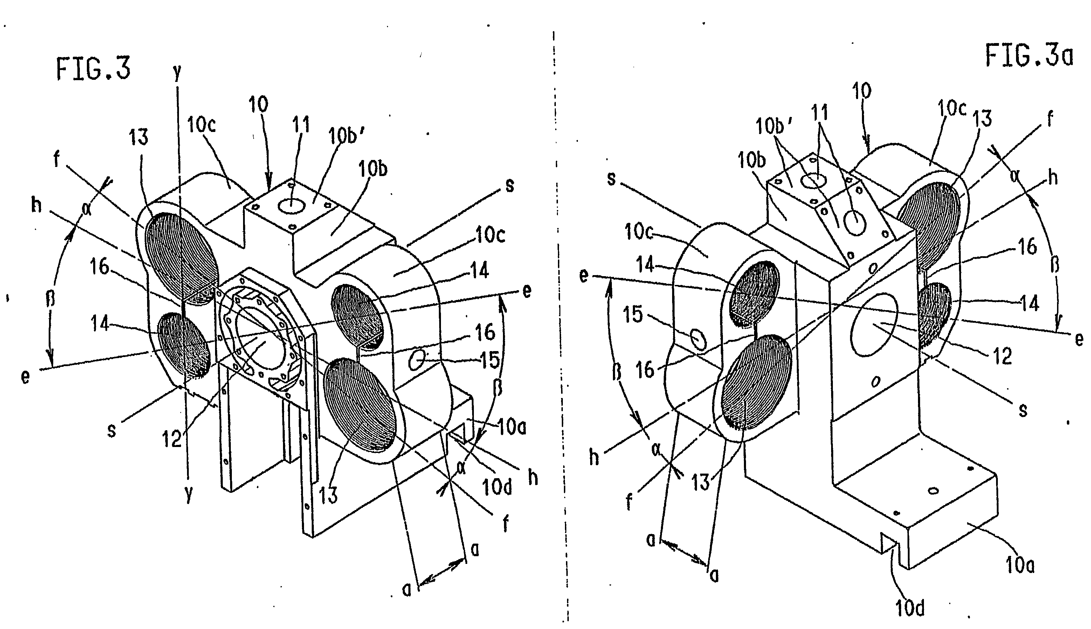

Die Kunststoff-Spritzgießeinheit (Spritzgießeinheit) umfaß einen den Plastifizierzylinder 17 aufnehmenden Träger- und Versorgungsblock (Block 10). Der Plastifizierzylinder 17 ist Bestandteil einer komplexeren, mit Heizeinrichtungen versehenen Plastifiziereinheit, die von einem Schutzgehäuse 23 umschlossen ist. Der Block 10 ist mit zwei symmetrisch zur Spritzachse s–s der Spritzgießeinheit liegenden Bohrungen 14 versehen. In den Bohrungen 14 sind hydraulische Antriebszylinder A zum axialen Verschieben der Spritzgießeinheit auf Führungssäulen 19 aufgenommen. Die Kolben 19c der Antriebszylinder A sitzen auf den Führungssäulen 19 fest auf, die am stationären Formträger (zeichnerisch nicht dargestellt) der zugehörigen Kunststoff-Spritzgießmaschine mittels Anschlußorganen 19a axial festlegbar sind. Die Antriebszylinder bestehen somit je aus einer Führungssäule 19 mit durch Bohrungen 19b betätigten Kolben, einem durch eine Stahlhülse gebildeten eigentlichen Zylinder 20a und zwei Zylinderdeckeln 20b. Die Antriebszylinder A sind als bauliche Einheit in die Bohrungen 14 eingefügt. Außerdem sind im Block 10 zwei weitere Bohrungen 13 vorgesehen, die ebenfalls symmetrisch zur Spritzachse s-s angeordnet sind. In diese weiteren Bohrungen 13 sind hydraulische Einspritzzylinder E zum axialen Antreiben einer im Plastifizierzylinder 17 angeordneten, rotierbaren Förderschnecke 35 eingefügt. Wie insbesondere aus den Figuren 3,3a ersichtlich, liegen die Bohrungen 13,14 für die Einspritz- bzw. Antriebszylinder E bzw. A in einer Ebene f-f bzw. e-e, die einen Winkel α bzw. β zur Horizontalen h-h einschließen. Die Bohrungen 13,14 sind mit einem Innengewinde versehen, das mit einem Außengewinde 20c,21f der eingefügten Zylinder A,E im Eingriff steht. Die Bohrungen 13,14 sind in Flügelbereichen 10c des Blockes 10 geringerer axialer Tiefe a-a eingebracht, die beidseits der Spritzachse s-s liegen. Aufgrund der zur Spritzachse s-s diametralen Anordnung der Antriebszylinder A und der Einspritzzylinder E sind in jedem Flügelbereich 10c eine Bohrung 14 für den Antriebszylinder A und eine Bohrung 13 für den Einspritzzylinder E symmetrisch zu einer vertikalen Ebene y-y (Figur 3) angeordnet. Die Bohrungen 13,14 stehen über einen in der Ebene y-y liegenden Spalt 16 miteinander in Verbindung. Die Breite des Spaltes 16 ist mittels einer durch den Spalt 16 gehenden, in einer Bohrung 15 des Flügelgehäuses 10c angeordneten Spannschraube 24 (Figur 2) im Gefolge einer elastischen Deformation des Flügelbereiches 10c verringerbar. Aufgrund dieser Ausbildung ist es möglich, die in die Bohrungen 13,14 eingeschraubten Antriebs- und Einspritzzylinder durch Anziehen der Spannschrauben 24 (Figur 2) in zentrierter Position durch Verspannung festzulegen. Wie vor allem aus den Figuren 3 und 3a erkennbar, ist der zwischen der Ebene e-e der Bohrungen 14 und der Horizontalen h-h eingeschlossene Winkel β mehr als doppelt so groß als der zwischen der Ebene f-f der weiteren Bohrungen 13 und der Horizontalen h-h eingeschlossene Winkel α.

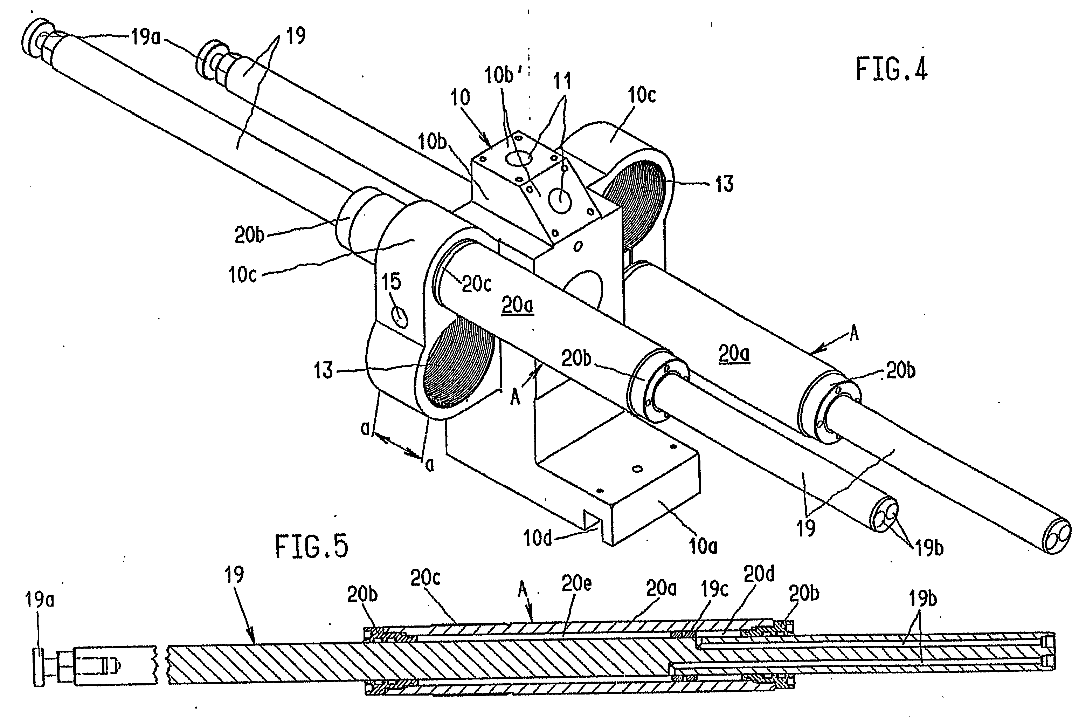

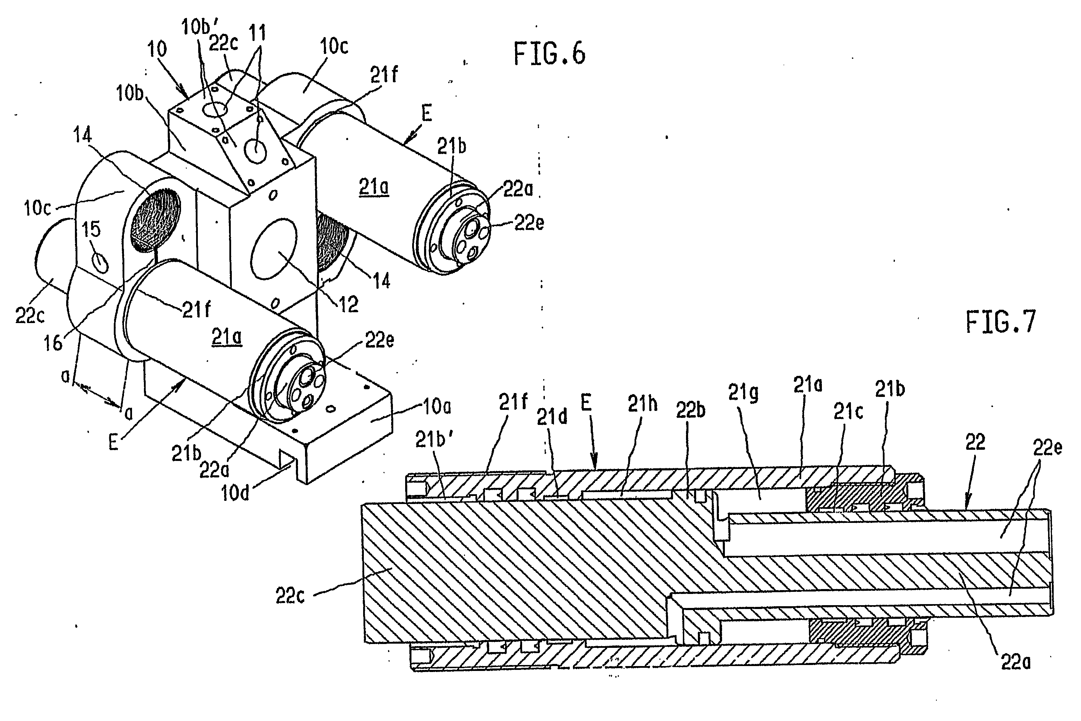

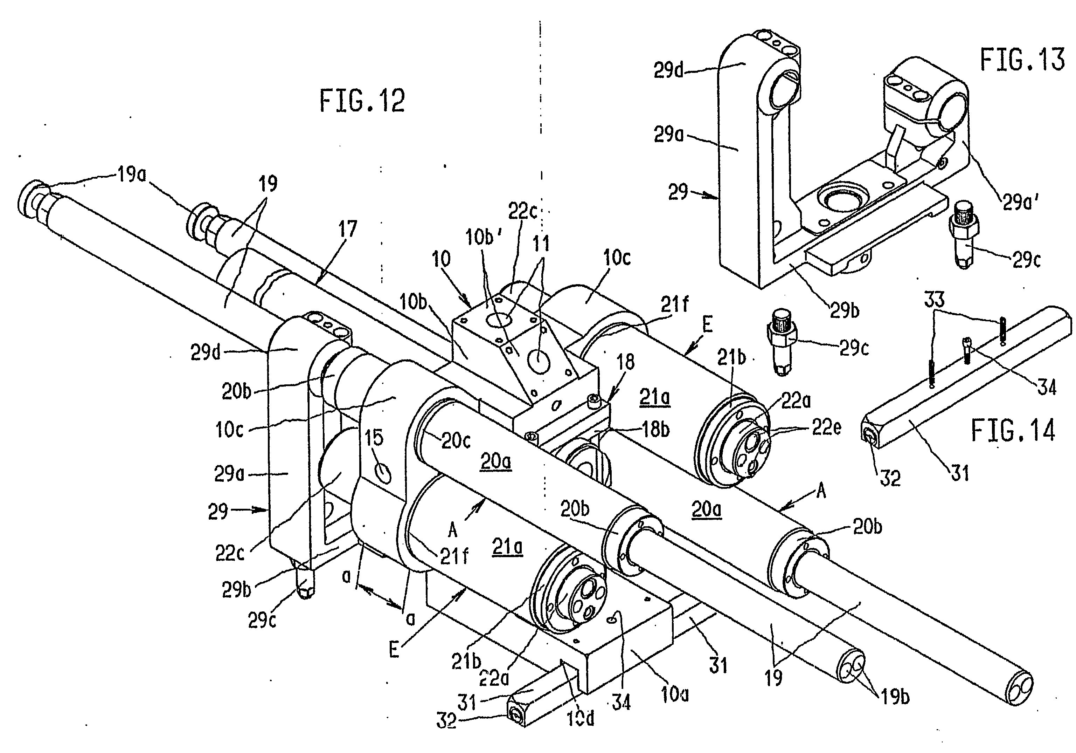

Solange diese Bedingung erfüllt ist, können die Winkel α und β dabei alle Werte zwischen 0 und 90° annehmen. Beide Ebenen e–e und f–f gehen durch die Spritzachse s–s. Die Antriebszylinder A und die Einspritzzylinder E sind vom Block 10 frei getragen. Dabei ragen zwei Drittel der Länge der Antriebszylinder A und mehr als die Hälfte der Länge der Einspritzzylinder E rückseitig aus dem Flügelbereich 10c des Blockes 10 heraus. Der Block 10 ist an seiner Basis mit einer quaderförmigen, rückseitigen Ausformung 10a versehen, deren rückseitiges Ende eine Einrichtung zum Justieren und Abstützen des Blockes 10 besitzt. Diese Einrichtung umfaßt einen in einer Quernut 10d der Ausformung 10a mit Spiel aufgenommenen, horizontalen Lagerbalken 31. Dieser ist mittels endständiger Laufrollen 32 auf einer planen Stützfläche des Maschinenfußes 36 abstützbar. Der Block 10 ist mittels Stellschrauben 33 am Lagerbalken 31 justierbar und mittels einer Spannschraube 34 festlegbar (Fig. 12, 14). Beim normalen Spritzbetrieb wird die Spritzgießeinheit bei jedem Spritzzyklus in aller Regel auf die Spritzgießform auf- und abgesetzt. Bei diesen periodischen Auf- und Absetzbewegungen "rollt" der Block 10 auf den Laufrollen 32, die den Lagerbalken 31 nach unten nur geringfügig überragen. Der konkrete Aufbau von Antriebszylinder A und Einspritzzylinder E ist in den figuren 4, 7 verdeutlicht. Danach bilden die Führungssäulen 19 die Kolbenstangen der Antriebszylinder A. Die durch Stahlhülsen gebildeten eigentlichen Zylinder 20a der Antriebszylinder A umschließen die Führungssäulen 19 mit Spiel zur Bildung der Zylinderräume 20e und 20d. Letztere sind über Bohrungen 19b in der zugehörigen Führungssäule 19 wechselweise mit Drucköl beschickbar, um die Spritzgießeinheit in den Spritzzyklen wechselweise auf die Spritzgießform aufzusetzen bzw. von dieser abzusetzen. Insbesondere kann es für entsprechende Zwecke nützlich sein, nur einen Antriebszylinder zu verwenden.

Die Einspritzkolben 22 der Einspritzzylinder E sind mit einem eigentlichen Kolben 22b versehen und ragen mit einem Abschnitt 22a geringeren Durchmessers rückseitig aus dem Zylinderdeckel 21b heraus. Ein Abschnitt 22c größeren Durchmessers durchgreift den vorderen Zylinderdeckel 21b'.

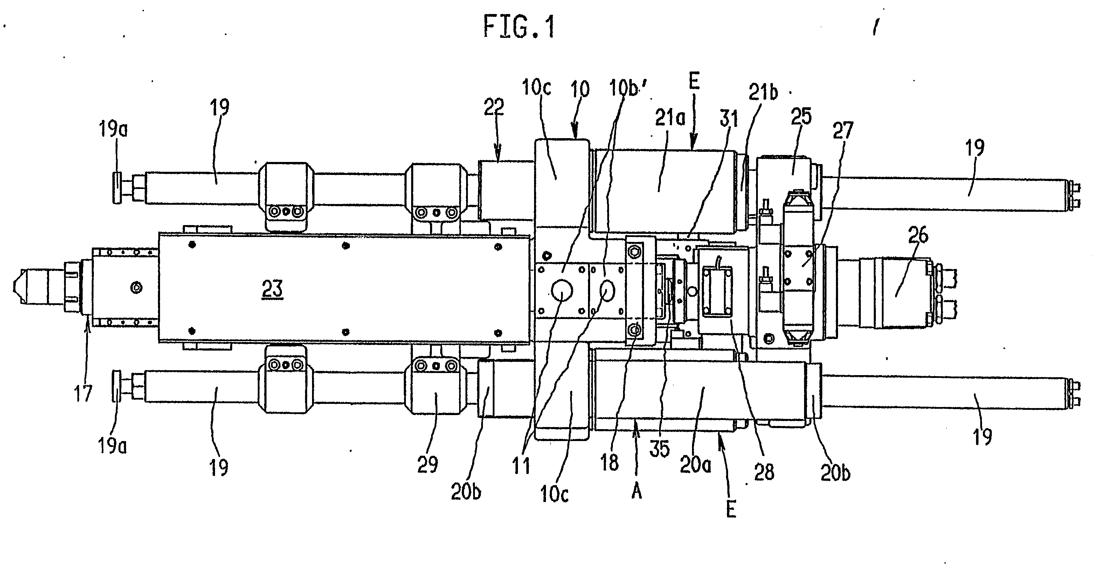

Die Zylinderräume 21h und 21g können bedarfsweise beim Einspritzhub miteinander in Verbindung gesetzt werden, so daß das aus dem Zylinderraum 21h verdrängte Drucköl in den Zylinderraum 21g eingespeist wird. Der Einspritzkolben 22 ist auf der einen Seite seines eigentlichen Kolbens 22b auf einem Führungsring 21d des durch eine Stahlhülse gebildeten eigentlichen Zylinders 21a und auf der anderen Seite durch einen Führungsring 21c im Zylinderdeckel 21b geführt. Die rückseitig aus dem Einspritzzylinder herausragenden Enden der Einspritzkolben 22 sind über eine Einspritzbrücke 25 (Fig. 1,2) mit der Förderschnecke 35 verbunden. Über die Einspritzbrücke 25 tragen die Kolben 22 der Einspritzzylinder E den Rotationsmotor 26 für die förderschnecke 35 sowie einen Lagerblock 28 für Einrichtungen zur Übertragung des Drehmomentes vom Rotationsmotor 26 auf die Förderschnecke. Die Übertragung erfolgt über eine in einer zentralen Bohrung 25e aufgenommene Antriebswelle 57 mit rückseitigem Mitnahmeteil 57c über ein Mitnehmerstück 38 auf die Förderschnecke 35. Das Mitnehmerstück 38 befindet sich mit dem Einschraubgewinde 57b der Antriebswelle 57 bezüglich der Drehrichtung in drehfestem Eingriff. An das Mitnehmerstück 38 ist die Förderschnecke 35 bei radialer und axialer Sicherung anschließbar. Die Antriebswelle 57 ist mittels Radiallager 56 drehbar gelagert. Zur sicheren Übertragung des Einspritzdruckes von der Trägerbrücke 25 auf die Antriebswelle 57 ist ein Axiallager 49 vorgesehen. Der mittels Befestigungsschrauben über Bohrungen 28b an der Trägerbrücke 25 befestigte Lagerblock 28 nimmt den vorderen Abschnitt der Antriebswelle 57 und den rückwärtigen Abschnitt des Mitnehmerstückes 38 zur Abstützung auf. Auf der Einspritzbrücke 25 sind ein Schaltventil 27 und ein Regelventil 27a für die Einspritzzylinder E angeordnet. Bei Betätigung der Einspritzzylinder E gelangt das Drucköl über das Regelventil 27a und über Bohrungen 25c in der Einspritzbrücke 25 sowie über Axialbohrung 22e des Kolbens 22 in den Zylinderraum 21h bzw. den Zylinderraum 21g. Wie aus Figur 15 ersichtlich, weist die Einspritzbrücke 25 in Flügelbereichen 25a zylindrische Vertiefungen 25b zur Aufnahme der rückseitigen Enden der Kolben 22 auf. Mit 25d sind Anschlußorgane für die Kolben 22 bezeichnet. Durch ein solches starres Leitungssystem ohne flexible, sich unter Druck dehnende Leitungsabschnitte werden negative Einflüsse auf die Regelung der Einspritzung zuverlässig vermieden.

Wie insbesondere aus den Figuren 13,14 ersichtlich, sind die Führungssäulen 19 mittels eines stationären, U-förmigen Bügels unmittelbar vor den vorderseitigen Enden der Antriebszylinder A abgestützt. Der Stützbügel 29 umfaßt einen längeren Stützschenkel 29a und einen kürzeren Stützschenkel 29a', die über einen Steg 29b miteinander verbunden sind. Die Stützschenkel 29a, 29a' sind über Spannmuffen 29d mit den Führungssäulen 19 verspannt. Der Stützbügel 29 ruht über Justierschrauben 29c auf einer Stützfläche des Maschinenfußes 36.

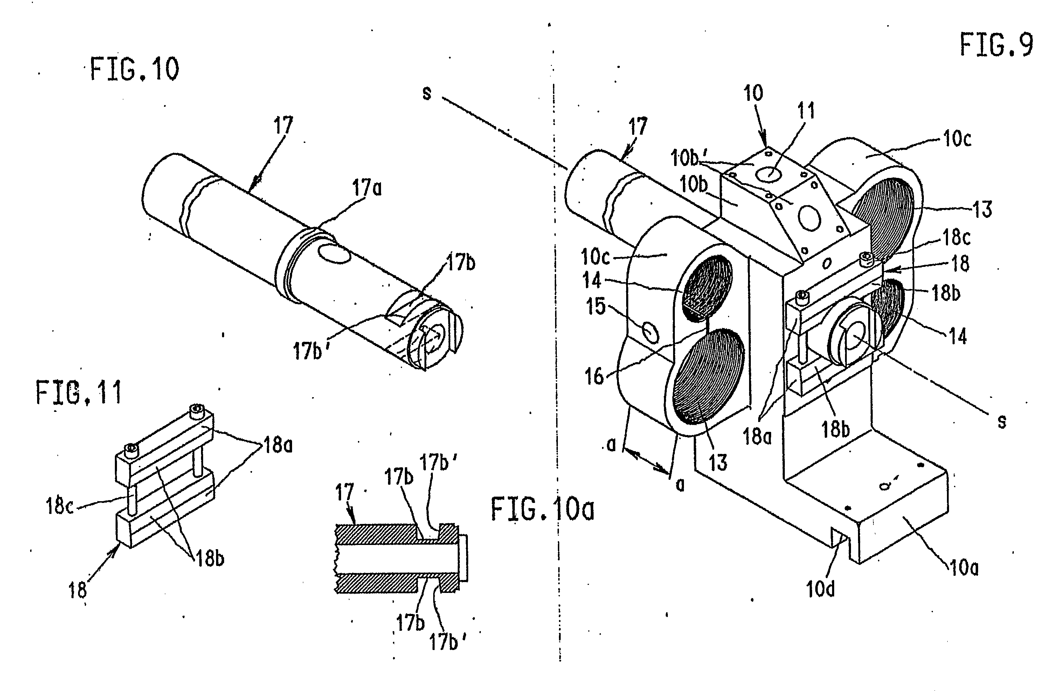

Der Plastifizierzylinder 17 ist in der zentralen Bohrung 12 des Blockes 10 mittels eines stirnseitig am Block 10 anliegenden Radialflansches 17a und mittels rückseitig am Block 10 angeordneter Spannelemente 18a einer Spanneinrichtung 18 (Figur 10 bis 13) verriegelbar. Die Spannelemente 18a stehen über Schraubenbolzen 18c miteinander in Verbindung. In Spannposition taucht ein mit einer Schrägfläche 18b versehenes Spannprofil in ein entsprechendes Spann-Nut 17b des Plastifizierzylinders ein und liegt dort mit seiner Schrägfläche 18b an einer schrägen Flanke 17b' der Spann-Nut an. Beim Anziehen der Schraubenbolzen 18c wird der an seinem Radialflansch 17a an der Stirnseite des Blockes 10 widergelagerte Plastifizierzylinder durch das Aufgleiten der Schrägflächen 18b der Spannelemente 18a auf den Schrägflächen 17b' des Plastifizierzylinders 17 axial vorgespannt. Eine Ausformung 10b des Blockes 10 weist Anschlußflächen 10b' für Einrichtungen, zum Beispiel einen Granulatbehälter 30, auf, die das Kunststoffmaterial in einen der Zufuhrkanäle 11 einbringt.

## Patentansprüche

1. Kunststoff-Spritzgießeinheit (Einheit) mit einem den Plastifizierzylinder (17) lösbar aufnehmenden Träger- und Versorgungsblock (Block 10), mit zwei symmetrisch zur Spritzachse (s-s) in Bohrungen (14) des Blockes (10) aufgenommenen hydraulischen Antriebszylindern (A) zum axialen Verschieben der Spritzgießeinheit auf Führungssäulen (19), deren Kolben (19c) auf den Führungssäulen (19) aufsitzen, und mit wenigstens einem am Block (10) abgestützten hydraulischen Einspritzzylinder (E) als Antrieb einer im Plastifizierzylinder (17) angeordneten, rotierbaren Förderschnecke (35), dadurch gekennzeichnet, daß die je aus einer Führungssäule (19) mit zugehörigem Kolben (19b), einem Zylinder (20a) und zwei Zylinderdeckeln (20b) bestehenden Antriebszylinder (A) als bauliche Einheiten in die Bohrungen (14) des Blockes (10) und die Einspritzzylinder (E) als bauliche Einheiten in symmetrisch zur Spritzachse angeordnete weitere Bohrungen (13) eingefügt sind und daß die Bohrungen (14 bzw. 13) je symmetrisch zu einer Ebene (f-f bzw. e-e) liegen, die einen Winkel ($\alpha$ bzw. $\beta$) zur Horizontalen (h-h) einschließt.

2. Einheit nach Patentanspruch 1, dadurch gekennzeichnet, daß die Bohrungen (13 bzw. 14) je mit einem Innengewinde versehen sind, das mit dem eigentlichen Zylinder (21a bzw 20a) des eingefügten Einspritzzylinders (E) bzw. Antriebszylinder (A) im Eingriff stehen.

3. Einheit nach Patentanspruch 1 oder 2, dadurch gekennzeichnet, daß in beidseits der Spritzachse (s-s) liegenden Flügelbereichen (10c) geringerer axialer Tiefe (a-a) des durch ein Gußstück gebildeten Blockes (10) je eine Bohrung (14) für einen Antriebszylinder (A) und eine Bohrung (13) für einen Einspritzzylinder (E) symmetrisch zu je einer vertikalen Ebene (y-y) angeordnet sind und daß die Bohrungen (13, 14) über einen in dieser Ebene (y-y) liegenden Spalt (16) miteinander in Verbindung stehen, dessen Breite mittels einer den Spalt (16) gehenden, in einer Querbohrung (15) des Flügelbereiches (10c) angeordneten Spannschraube (24) im Gefolge einer Deformation des Flügelbereiches (10c) verringerbar ist.

4. Einheit nach einem der vorhergehenden Patentansprüche, dadurch gekennzeichnet, daß der zwischen der Ebene (e-e) der Bohrungen (14) von der Horizontalen (h-h) eingeschlossene Winkel ($\beta$) mehr als doppelt so groß ist als der zwischen der Ebene (f-f) der weiteren Bohrung (13) und der Horizontalen (h-h) eingeschlossene ($\alpha$), wobei beide Ebenen (e-e, f-f) durch die Spritzachse (s-s) gehen.

5. Einheit nach einem der vorhergehenden Patentansprüche, dadurch gekennzeichnet, daß die Antriebszylinder (A) und die Einspritzzylinder (E) vom Block (10) frei getragen sind, wobei etwa zwei Drittel der Länge der Antriebszylinder (A) und mehr als die Hälfte der Länge der Einspritzzylinder (E) rückseitig aus dem Flügelbereich (10c) des Blockes (10) herausragen.

6. Einheit nach einem der vorhergehenden Patentansprüche, dadurch gekennzeichnet, daß in einer rückseitigen Ausformung (10a) des Blockes (10) eine Einrichtung zum Justieren und Abstützen vorgesehen ist, die einen in einer Quernut (10d) der Ausformungen (10a) mit Spiel aufgenommenen horizontalen Lagerbalken (31) umfaßt, der mittels endständiger Laufrollen (32) auf einer planen Stützfläche abstützbar ist und daß der Block (10) mittels Stellschrauben (33) am Lagerbalken justierbar und mittels einer Spannschraube (34) festlegbar ist.

7. Einheit nach einem der vorhergehenden Patentansprüche, dadurch gekennzeichnet, daß die mit einem Abschnitt (22a) geringeren Durchmessers rückseitig aus den Zylindern (21a) herausragenden Einspritzkolben (22) der Einspritzzylinder (E) über eine Einspritzbrücke (25) mit der Förderschnecke (35) verbunden sind und daß an der Einspritzbrücke (25) ein Schaltventil (27) und ein Regelventil (27a) für die Einspritzzylinder (E) angeordnet sind, wobei das Drucköl über Axialbohrungen (19b, 22b) in den Führungssäulen (19) und den Kolben (22) in die Zylinderkammern der Zylinder (A, E) einführbar ist.

8. Einheit nach einem der vorhergehenden Patentansprüche, dadurch gekennzeichnet, daß die Kolben (22) der Einspritzzylinder (E) über die Trägerbrücke (25) den Rotationsmotor (26) für die Förderschnecke (35) sowie einen Lagerblock (28) für die Einrichtungen zur Übertragung des Drehmomentes vom Rotationsmotor (26) auf die Förderschnecke (35) frei tragend und in Führungsringen (21c, 21d) des Zylinderdeckels (21b) und des Zylinders (21a) geführt sind.

9. Einheit nach einem der vorhergehenden Patentansprüche, dadurch gekennzeichnet, daß der Plastifizierzylinder (17) in der zentralen Bohrung (12) mittels eines stirnseitig am Block (10) anliegenden Radialflansches (17a) und mittels rückseitig am Block (10) radial geführter Spannelemente (18a) axial vorgespannt ist, die mit Schrägflächen an korrespondierenden Schrägflächen (17b') diametraler Nuten (17b) des Plastifizierzylinders (17) anliegen.

10. Einheit nach einem der vorhergehenden Patentansprüche, dadurch gekennzeichnet, daß die axial festlegbaren Führungssäulen (19) mittels eines stationären Stützbügels (29) abgestützt sind, die unmittelbar vor den Einspritzzylindern (E) über Stützschenkel (29a, 29a') ungleicher Länge an den Führungssäulen (19) angreifen.

## Claims

1. A plasticizing and injecting unit (unit) comprising a carrier and supply block (block 10) containing the detachably mounted plasticizing cylinder (17), two hydraulic advanceretract cylinders (A), which are disposed symmetrically to the injection axis (s–s) in bores (14) of the block (10) to axially displace the injection moulding machine on guide rods (19), the pistons (19c) of which are mounted on the guide rods (19), and at least one hydraulic injection cylinder (E) supported on the block (10) as the drive means for a rotary feed screw (35), which is disposed in the plasticizing cylinder (17), characterised in that the advance-retract cylinders (A), which each comprise a guide rod (19) with an associated piston (19b), a cylinder (20a) and two cylinder caps (20b), are inserted as constructional modules into the bores (14) of the block (10) and the injection cylinders (E) are inserted as construction modules into other bores (13) which are disposed symmetrically to the injection axis and in that the bores (14 or 13) are each symmetrical to a plane (f–f or e–e) which forms an angle (α or β) to the horizontal (h–h).

2. A unit according to claim 1 characterised in that the bores (13 or 14) are each provided with a female thread that engages the actual cylinder (21a or 20a) of the inserted injection cylinder (E) or the advance-retract cylinders (A).

3. A unit according to claims 1 or 2 characterised in that in wing portions (10c) which lie on both sides of the injection axis (s–s) at a small axial depth (a–a) of the block (10), which is formed by a casting, there is one bore (14) for each advance-retract cylinder (A) and one bore (13) for one injection cylinder (E) disposed symmetrically to a vertical plane (y–y) in each case and in that the bores (13, 14) are interconnected through a slot (16) which is in this plane (y–y), the width of which slot (16) can be reduced due to the deformation of the wing portion (120c) by means of a clamp screw (24) which passes through the slot (16) and is disposed in a transverse bore (15) of the wing portion (10c).

4. A unit according to one of the previous claims characterised in that the angle (β) which is formed between the plane (e–e) of the bores (14) by the horizontal (h–h) is more than twice as large as the angle (α) between the plane (f–f) of the other bore (13) and the horizontal (h–h), whereby both planes (e–e, f–f) pass through the injection axis (s–s).

5. A unit according to one of the previous claims characterised in that the advance-retract cylinders (A) and the injection cylinders (E) are freely supported by the block (10), whereby approximately two thirds of the length of the advanceretract cylinders (A) and more than half the length of the injection cylinders (E) protrude from the rear of the wing portion (10c) of the block (10).

6. A unit according to one of the previous claims characterised in that in a bracket (10a) at the rear of the block (10) there is an adjusting and supporting device, which comprises a horizontal bearing beam (31), which is accepted in a transverse groove (10d) of the bracket (10a) with clearance, which bearing beam (31) can be supported on a flat supporting surface by means of rollers (32) and in that the block (10) can be adjusted by means of levelling screws (33) on the bearing beam and can be fixed by means of clamp screw (34).

7. A unit according to one of the previous claims characterised in that the injection pistons (22) of the injection cylinders (E), which pistons (22) project from the rear of the cylinders (21a) with a section (22a) with a small diameter, are connected with the feed screw (35) through an injection bridge (25) and in that there is a directional control valve (27) and a flow control valve (27a) for the injection cylinders (E) at the injection bridge (25), whereby the pressure oil can be fed into the cylinder chambers of the cylinders (A, E) through axial bores (19b, 22b) in the guide rods (19) and the pistons (22).

8. A unit according to one of the previous claims characterised in that the pistons (22) of the injection cylinders (E) freely support the rotary motor (26) for the feed screw (35) through the support bridge (25) and a bearing block (28) for the devices which transfer the torque from the rotary motor (26) to the feed screw (35), and are guided in guide rings (21c, 21d) of the cylinder cap (21b) and of the cylinder (21a).

9. A unit according to one of the previous claims characterised in that the plasticizing cylinder (17) is axially prestressed in the central bore (12) by means of a radial flange (17a), which abuts the front end of the block (10), and by means of clamping elements (18a), which are guided radially at the rear of the block (10), the inclined surfaces of which clamping elements (18a) abut corresponding inclined surfaces (17b') of diametric slots (17b) of the plasticizing cylinder (17).

10. A unit according to one of the previous claims characterised in that the axially securable guide rods (19) are supported by means of a stationary yoke (29), which engage the guide rods (19) directly in front of the injection cylinders (E) by means of support legs (29a, 29a') of unequal lengths.

**Revendications**

1. Unité pour mouler par injection de la matière plastique (unité), comprenant un bloc de support et d'alimentation (bloc 10) qui reçoit de manière amovible le cylindre de ramolissement (17), comprenant deux cylindres hydrauliques d'entraînement (A) qui sont logés dans des perçages (14) du bloc (10) de manière symétrique par rapport à l'axe d'injection (s–s), qui sont destinés à déplacer axialement l'unité de moulage par injection sur des colonnes de guidage (19) et dont les pistons (19c) reposent sur les colonnes de guidage (19), et comprenant au moins un cylindre hydraulique d'injection (E) s'appuyant sur le bloc (10) pour servir d'entraînement à une vis sans fin d'alimentation tournante (35) disposée dans le cylindre de ramolissement (17), caractérisée par le fait que les cylindres d'entraînement (A), composés chacun d'une colonne de guidage (19) munie du piston correspondant (19b), d'un cylindre (20a) et de deux couvercles de cylindre (20b), sont introduits sous la forme d'unités de construction dans les perçages (14) du bloc (10), et que les cylindres d'injection (E) sont introduits sous la forme d'unités de construction dans d'autres perçages (13) disposés symétriquement par rapport à l'axe d'injection, et par le fait que les perçages (14 et 13, respectivement) sont à chaque fois disposés symétriquement par rapport à un plan (f–f et e–e, respectivement) qui forme un angle (α et β, respectivement) avec l'horizontale (h–h).

2. Unité selon la revendication 1, caractérisée par le fait que les perçages (13 et 14, respectivement) sont munis chacun d'un filetage intérieur qui est en prise avec le cylindre proprement dit (21a et 20a, respectivement) du cylindre d'injection (E) ou, respectivement, du cylindre d'entraînement (A) qui y est introduit.

3. Unité selon la revendication 1 ou 2, caractérisée par le fait que, dans des zones latérales (10c) du bloc (10) constitué par une pièce coulée qui présentent une plus faible profondeur axiale (a–a) et qui sont situées des deux côtés de l'axe d'injection (s–s), sont ménagés à chaque fois, de manière à chaque fois symétrique par rapport à un plan vertical (y–y), un perçage (14) destiné à un cylindre d'entraînement (A) et un perçage (13) destiné à un cylindre d'injection (E), et par le fait que les perçages (13, 14) sont reliés entre eux par une fente (16) qui est disposée dans ce plan (y–y) et dont la largeur peut être diminuée, à la suite d'une déformation de la zone latérale (10c), au moyen d'une vis de serrage (24) passant à travers la fente (16) et montée dans un perçage transversal (15) de la zone latérale (10c).

4. Unité selon l'une des revendications précédentes, caractérisée par le fait que l'angle (β) formé avec l'horizontale (h–h) par le plan (e–e) des perçages (14) est plus de deux fois supérieur à l'angle (α) formé avec l'horizontale (h–h) par le plan (f–f) de l'autre perçage (13), les deux plans (e–e, f–f) passant par l'axe d'injection (s–s).

5. Unité selon l'une des revendications précédentes, caractérisée par le fait que les cylindres d'entraînement (A) et les cylindres d'injection (E) sont portés librement par le bloc (10), environ deux tiers de la longueur des cylindres d'entraînement (A) et plus de la moitié de la longueur des cylindres d'injection (E) faisant saillie vers l'arrière hors de la zone latérale (10c) du bloc (10).

6. Unité selon l'une des revendications précédentes, caractérisée par le fait qu'il est prévu, dans un prolongement postérieur (10a) du bloc (10), un dispositif de réglage et d'appui comprenant une longrine horizontale servant de palier (31) qui est reçue avec un jeu dans une rainure transversale (10d) du prolongement (10a) et qui peut s'appuyer sur une surface d'appui plane au moyen de galets d'extrémité (32), et par le fait que le bloc (10) peut être réglé sur la longrine servant de palier au moyen de vis de réglage (33) et fixé au moyen d'une vis de serrage (34).

7. Unité selon l'une des revendications précédentes, caractérisée par le fait que les pistons d'injection (22) des cylindres d'injection (E) qui font saillie vers l'arrière hors des cylindres (21a) par une partie (22a) de plus faible diamètre sont reliés à la vis sans fin d'alimentation (35) par l'intermédiaire d'un pont d'injection (25), et par le fait d'une soupape de commande (27) et une soupape de régulation (27a) sont disposées pour les cylindres d'injection (E) sur le pont d'injection (25), de l'huile sous pression pouvant être introduite dans les chambres de cylindre des cylindres (A, E) par l'intermédiaire de perçages axiaux (19b, 22b) ménagés dans les colonnes de guidage (19) et les pistons (22).

8. Unité selon l'une des revendications précédentes, caractérisée par le fait que les pistons (22) des cylindres d'injection (E) portent librement par l'intermédiaire du pont porteur (25) le moteur (26) qui fait tourner la vis sans fin d'alimentation (35), ainsi qu'un bloc-palier (28) pour les dispositifs transmettant le couple du moteur (26) à la vis sans fin d'alimentation (35), et qu'ils sont guidés dans des bagues de guidage (21c, 21d) du couvercle de cylindre (21b) et du cylindre (21a).

9. Unité selon l'une des revendications précédentes, caractérisée par le fait que le cylindre de ramolissement (17) est serré axialement dans le perçage central (12) au moyen d'un collet radial (17a) reposant frontalement sur le bloc (10) et au moyen d'éléments de serrage (18a) qui sont guidés radialement sur le bloc (10), du côté arrière, et qui reposent par des surfaces obliques sur des surfaces obliques correspondantes (17b') du rainures diamétrales (17b) du cylindre de ramolissement (17).

10. Unité selon l'une des revendications précédentes, caractérisée par le fait que les colonnes de guidage (19) qui peuvent être fixées axialement sont supportées par un étrier d'appui fixe (29) qui est en prise avec les colonnes de guidage (19), immédiatement avant les cylindres d'injection (E), par l'intermédiaire d'ailes d'appui (29a, 29a') de longueurs inégales.

FIG.1

FIG.2

EP 0 316 561 B1

FIG.3

FIG.3a

EP 0 316 561 B1

FIG.4

FIG.5

FIG.6

FIG.7

EP 0 316 561 B1

FIG.8

19a 19 22c 10 10b' 11 10c E 21b 22a 22e 10b 20b 10c 15 20c 20a 12 A 20a 22c 21f A 20b 20b E 21a 21b 22a 10d 10a 19 19b

EP 0 316 561 B1

FIG.10

FIG.9

17

17a

17b

17b'

FIG.11

18a

18c

18b

18

FIG.10a

17  17b  17b'

17b

17b'

s

17

17

10

11

10b'

10b

10c

13

18c

18

18b

14

10c

14

15

16

18a

18b

13

18a

s

a

a

10d

10a

EP 0 316 561 B1

FIG.12

FIG.13

FIG.14

FIG.15